Europäisches Patentamt

European Patent Office

Office européen des brevets

(11) Veröffentlichungsnummer: **0 153 985**

**A2**

(12) **EUROPÄISCHE PATENTANMELDUNG**

(21) Anmeldenummer: **84109761.1**

(22) Anmeldetag: **16.08.84**

(51) Int. Cl.⁴: **B 01 D 23/24**
B 01 D 23/10

(30) Priorität: **18.08.83 DE 3329869**

(43) Veröffentlichungstag der Anmeldung:
**11.09.85 Patentblatt 85/37**

(84) Benannte Vertragsstaaten:
**AT DE FR NL**

(71) Anmelder: **Passavant-Werke AG & Co. KG**

**D-6209 Aarbergen 7(DE)**

(72) Erfinder: **Weiler, Walter**
**Wilhelmstrasse 59**
**D-6252 Diez(DE)**

(74) Vertreter: **Glawe, Delfs, Moll & Partner Patentanwälte**
**Postfach 26 01 62 Liebherrstrasse 20**
**D-8000 München 26(DE)**

(54) **Verfahren und Vorrichtung zum Rückspülen eines Filters**

(57) Bei einem Filter, insbesondere Nachreinigungsfilter, zum Entfernen von Kohlenwasserstoffen aus Wasser, ist die Filtermasse in mehrere, in Durchlaufrichtung hintereinander liegende Schichten aufgeteilt, denen eigene Verteiler für Rückspülmedium zugeordnet sind, so daß die Schichten entsprechend ihrer unterschiedlichen Verschmutzung unabhängig voneinander z.B. während unterschiedlicher Zeiten und/oder mit unterschiedlicher Intensität rückgespült werden können.

Passavant-Werke AG & Co. KG
6209 Aarbergen 7


Verfahren und Vorrichtung
zum Rückspülen eines Filters
---------------------------------


B e s c h r e i b u n g


Die Erfindung betrifft ein Verfahren zum Rückspülen eines Filters durch Hindurchleiten eines flüssigen oder gasförmigen Rückspülmediums durch die Filtermasse in Gegenrichtung zur Durchflußrichtung im Filterbetrieb. Die Erfindung betrifft auch eine Vorrichtung zur Durchführung des Verfahrens.

Die Erfindung ist vorzugsweise, aber nicht ausschließlich anwendbar bei Filtern zum Abtrennen von Kohlenwasserstoffen od. dgl. organischen Verunreinigungen aus Wasser. In diesem Fall besteht die Filtermasse

- 1 -

vorzugsweise aus einem für die Kohlenwasserstoffe adsorbierend und/oder koaleszierend wirkenden Material, z.B. in Form eines synthetischen Schaumstoffs mit offenporiger bzw. gitterartiger Struktur.

Beim Filterbetrieb werden die in Durchflußrichtung vordersten Bereiche der Filtermasse am stärksten von den abgefilterten Verunreinigungen verschmutzt und am schnellsten in ihrer Wirksamkeit herabgesetzt. Andererseits werden beim Rückspülen gerade diese Bereiche von dem in Gegenrichtung hindurchgeleiteten Rückspülmedium zuletzt und daher auch mit entsprechend verringerter Wirksamkeit erreicht. Es muß daher entweder unnötig lange rückgespült werden, was eine große Spülschlammmenge ergibt, oder man muß eine entsprechende Verschlechterung der Rückspülung und damit auch eine Verringerung des Reinigungsgrades beim nächstfolgenden Filterbetrieb in Kauf nehmen.

Aufgabe der Erfindung ist es, ein Verfahren der genannten Art anzugeben, bei dem die Rückspülung insgesamt mit größerer Wirksamkeit und/oder mit geringeren Mengen an Rückspülmedium und/oder in kürzerer Zeit durchgeführt werden kann.

Erfindungsgemäß ist ein Verfahren der eingangs genannten Art dadurch gekennzeichnet, daß in Durchflußrichtung hintereinanderliegende Schichten der Filtermasse unabhängig voneinander während unterschiedlicher Zeiten und/oder mit unterschiedlicher Intensität und/oder mit unterschiedlichen Rückspülmedien rückgespült werden.

Es ist somit möglich, insbesondere die in Durchlaufrichtung vorderste und daher am stärksten verschmutzte Schicht unabhängig von den dahinterliegenden Schichten rückzuspülen, d. h., ohne daß das hierfür benötigte Rückspülmedium zuerst die dahinterliegenden Schichten durchströmen muß. Insbesondere kann man die vorderste Schicht der Filtermasse zuerst, und danach die dahinterliegenden Schichten rückspülen, wobei beim Rückspülen der dahinterliegenden Schichten das Abziehen des Rückspülmediums durch die bereits rückgespülte vorderste Schicht mit geringem Widerstand erfolgen kann. Andere Möglichkeiten bestehen darin, die in Durchflußrichtung vorderste Schicht während längerer Zeit und/oder mit größerer Strömungsmenge und/oder mit einem besonders wirksamen Rückspülmedium zu spülen. Wenn die Rückspülung der dahinterliegenden Schichten

- 3 -

aufgenommen wird, kann die Rückspülung der vordersten Schicht weiter andauern oder aber beendet werden.

Eine Vorrichtung zur Durchführung des Verfahrens hat einen Behälter mit Zulauf und Ablauf für die zu filtrierende Flüssigkeit, eine zwischen Zu- und Ablauf angeordnete Filtermasse und einen auf der Ablaufseite der Filtermasse angeordneten Verteiler für Rückspülmedium, der an/eine Rückspülleitung angeschlossen ist. Erfindungsgemäß ist die Filtermasse in zwei oder mehr, in Durchflußrichtung hintereinanderliegende Schichten aufgeteilt, und zwischen den Schichten sind weitere Verteiler für Rückspülmedien angeordnet, die entweder an unabhängig voneinander beaufschlagbaren Rückspülleitungen oder über unabhängig voneinander betätigbare und/oder einstellbare Absperrorgane an eine gemeinsame Rückspülleitung angeschlossen sind.

Ein Abzug für Rückspülmedium und/oder rückgespülten Filterrückstand kann auf der Zulaufseite der vordersten Schicht der Filtermasse angeordnet sein.

Bei einer bevorzugten Ausführungsform füllt die Filtermasse den Behälter horizontal aus, und der Zulauf ist oberhalb und der Ablauf unterhalb der Filtermasse angeordnet, wobei jede Schicht der Filtermasse von einem durchlässigen Zwischenboden getragen
ist und in oder unter jedem Zwischenboden ein Verteiler
für Rückspülmedium angeordnet ist. Jede Schicht der
Filtermasse kann mit dem Zwischenboden und gegebenenfalls dem Verteiler eine aus dem Behälter herausnehmbare Einheit bilden.

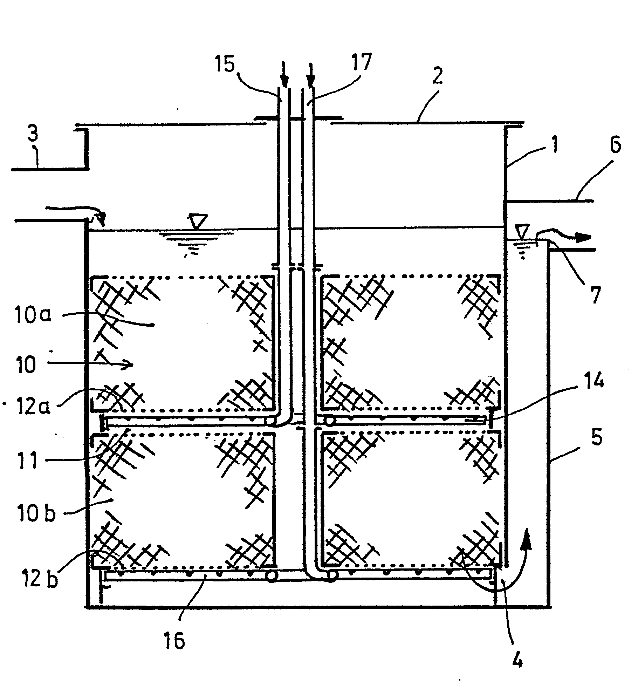

Eine Ausführungsform der Erfindung wird anhand
der Zeichnung näher erläutert. Die Zeichnung zeigt
im Schnitt eine Filtereinrichtung insbesondere für
das Abtrennen von Kohlenwasserstoffen und ähnlichen
organischen Verunreinigungen aus Wasser.

Ein im Grundriß z.B. kreisrunder Behälter 1 ist
mit einem Deckel 2 versehen und weist im oberen Bereich
einen Zulauf 3 für zu reinigendes Wasser oder Abwasser
sowie im unteren Bereich eine Abzugsöffnung 4 auf, die
über ein Steigrohr 5 mit einer Ablaufleitung 6 verbunden ist, wobei eine Überlaufkante 7 die Höhe des Wasserspiegels im Steigrohr 5 und in dem damit kommunizierenden Behälter 1 festlegt.

In dem Behälter 1 ist eine Filtermasse 10 angeordnet, die den horizontalen Behälterquerschnitt im wesentlichen vollständig ausfüllt und von dem zu reinigenden Wasser    vertikal nach unten durchströmt wird.
Die Filtermasse 10 ist vorzugsweise ein für die herauszufilternden Kohlenwasserstoffe und dergleichen
organischen Rückstände adsorbierend und/oder koaleszierend wirkendes Material. Hierfür stehen geeignete Materialien z.B. in Form von synthetischen Kunststoffen
mit offenzelliger bzw. gitterartiger Struktur mit geringem Strömungswiderstand zur Verfügung. Die gesamte Filtermasse kann derart unter dem Wasserspiegel
im Behälter 1 angeordnet sein, daß sich im Behälter 1
außer der Filterwirkung durch Anlagerung an die Filtermasse auch zusätzlich eine Schwerkraftabscheidung in der Weise ergibt, daß durch die koaleszierende Wirkung der Filtermasse gebildete Tröpfchen der
Kohlenwasserstoffe sich an der Oberfläche in Form
einer Schwimmschicht ansammeln und abgezogen werden
können.

Die Filtermasse ist gemäß der Ausführungsform in
zwei voneinander getrennten Schichten 10, 10b angeordnet, die durch einen Zwischenraum 11 getrennt sind.
Jede Filterschicht 10a, 10b befindet sich in einer
Umhüllung, die einen die Filterschicht tragenden
gitterförmigen Zwischenboden 12a, 12b aufweist. Auch
die Oberseite jeder Filterschicht kann von einem Gitter abgedeckt sein.

Unter der Filterschicht 10a befindet sich im Zwischenraum 11 ein Verteiler 14 für Rückspülmedium, der an eine Rückspülleitung 15 angeschlossen ist. Unter der unteren Filterschicht 10b befindet sich in üblicher Weise ein weiterer Verteiler 16, der an eine Rückspülleitung 17 angeschlossen ist. Die beiden Rückspülleitungen 15, 17 können unabhängig voneinander mit Rückspülmedium beaufschlagt werden, so daß Rückspülmedium den Verteilern 14, 16 zu unterschiedlichen Zeiten und/oder mit unterschiedlicher Intensität und/oder in unterschiedlicher Beschaffenheit zugeführt werden kann.

Jede Filterschicht 10a, 10b kann mit dem zugehörigen Zwischenboden 12a, 12b und ggf. mit dem zugehörigen Verteiler 14, 16 eine aus dem Behälter herausnehmbare Einheit bilden.

Die Vorrichtung kann in der Weise betrieben werden, daß beim Rückspülen zuerst über die Rückspülleitung 15 dem Verteiler 14 ein Rückspülmedium mit einer für die Reinigung der stärker verschmutzten

- 7 -

Filterschicht 10a geeigneten Intensität, Zeitdauer und/oder Beschaffenheit zugeführt wird. Nach Abschluß des Rückspülens der oberen Filterschicht 10a kann dann über die Rückspülleitung 17 und den Verteiler 16 auch die untere Schicht 10b rückgespült werden, wobei hierfür ggf. eine kürzere Zeit und/oder eine geringere Intensität und/oder eine andere Beschaffenheit des Rückspülmediums zweckmäßig sein kann. Beispielsweise kann man zur Unterstützung des Rückspülens der oberen, stärker verschmutzten Filterschicht 10a dem benutzten Rückspülmedium z. B. Lösungsmittel für den Filterrückstand zusetzen und/oder zusätzlich Preßluft zum Erzeugen von Luftblasen in der Filterschicht 10a zuführen, während solche Maßnahmen beim Rückspülen der unteren Filterschicht 10b möglicherweise nicht oder in geringerem Maße nötig sind.

Die Erfindung ist nicht auf die Einzelheiten der dargestellten Ausführungsform beschränkt. Beispielsweise können die Rückspülleitungen 15, 17 an eine gemeinsame Zuleitung über unabhängig betätigbare Absperrorgane angeschlossen sein. Die Filtermasse 10 kann auch in mehr als nur zwei übereinanderliegende, unabhängig rückspülbare Schichten aufgeteilt sein.

Der beim Rückspülen anfallende Spülschlamm kann auf verschiedene, an sich bekannte Arten entfernt werden, z.B. durch Absaugen oder durch Wegleiten durch den Zulauf 3. Wenn z.B. dem Filter ein Schwerkraftabscheider vorgeschaltet ist, kann dieser vor dem Rückspülen des Filters entleert werden und dann zur Aufnahme des Rückspülschlammes dienen.

0153985

Passavant-Werke AG & Co. KG
6209 Aarbergen 7


Verfahren und Vorrichtung
zum Rückspülen eines Filters
-------------------------------


P a t e n t a n s p r ü c h e


1.   Verfahren zum Rückspülen eines Filters durch Hindurchleiten eines flüssigen oder gasförmigen Rückspülmediums durch die Filtermasse in Gegenrichtung zur Durchflußrichtung im Filterbetrieb, dadurch g e k e n n - z e i c h n e t , daß in Durchflußrichtung hintereinanderliegende Schichten der Filtermasse unabhängig voneinander während unterschiedlicher Zeiten und/oder mit unterschiedlicher Intensität und/oder mit unterschiedlichen Rückspülmedien rückgespült werden.


- 1 -

2. Verfahren nach Anspruch 1, dadurch g e k e n n -
z e i c h n e t , daß das Rückspülmedium der in Durchflußrichtung vordersten Schicht während längerer Zeit
und/oder mit größerer Strömungsmenge zugeführt wird
als den dahinterliegenden Schichten.

3. Verfahren nach Anspruch 1 oder 2, dadurch g e -
k e n n z e ic h n e t , daß während mindestens eines
Teils des Rückspülvorgangs in jede von mehreren hintereinanderliegenden Schichten der Filtermasse jeweils an
deren in Durchflußrichtung hinterer Grenze ein Teilstrom
des Rückspülmediums eingeleitet und das gesamte Rückspülmedium an der Vorderseite an der vordersten Schicht
abgezogen wird.

4. Verfahren nach Anspruch 1 oder 2, dadurch g e -
k e n n z e i c h n e t , daß die Einleitung des Rückspülmediums während einer ersten Phase des Rückspülvorgangs nur in die vorderste Schicht der Filtermasse
und in späteren Phasen nacheinander in dahinterliegende
Schichten erfolgt.

5. Verfahren nach Anspruch 4, dadurch g e k e n n -
z e i c h n e t , daß die Einleitung von Rückspülmedium
in eine Schicht auch nach Beginn der Einleitung in die jeweils dahinterliegende Schicht andauert.

6.   Verfahren nach Anspruch 4, dadurch  g e k e n n -
z e i c h n e t , daß bei Beginn der Einleitung von Rückspülmedium in eine Schicht die Einleitung in die jeweils
davor liegenden Schichten beendet wird.

7.   Vorrichtung zur Durchführung des Verfahrens nach
einem der Ansprüche 1 bis 6, mit einem Behälter mit Zulauf und Ablauf für die zu filtrierende Flüssigkeit, einer
zwischen Zu- und Ablauf angeordneten Filtermasse und einem
auf der Ablaufseite der Filtermasse angeordneten Verteiler
für Rückspülmedium, der an eine Rückspülleitung angeschlossen ist, dadurch  g e k e n n z e i c h n e t , daß die
Filtermasse (10) in zwei oder mehr, in Durchflußrichtung
hintereinanderliegende Schichten (10a, 10b) aufgeteilt ist,
daß zwischen den Schichten (10a, 10b) je ein weiterer
Verteiler (14) für Rückspülmedium angeordnet ist, und
daß die Verteiler (14, 16) an unabhängig voneinander beaufschlagbare Rückspülleitungen (15, 16) oder über unabhängig voneinander betätigbare und/oder einstellbare
Absperrorgane an eine gemeinsame Rückspülleitung angeschlossen sind.

8.   Vorrichtung nach Anspruch 7, dadurch  g e k e n n -
z e i c h n e t , daß ein Abzug für Rückspülmedium und/oder

- 3 -

rückgespülten Filterrückstand auf der Zulaufseite der vordersten Schicht (10a) der Filtermasse angeordnet ist.

9.    Vorrichtung nach Anspruch 7, dadurch g e k e n n - z e i c h n e t , daß die Filtermasse (10) den Behälter (1) horizontal ausfüllt und der Zulauf (3) oberhalb und der Ablauf (4) unterhalb der Filtermasse angeordnet ist, dadurch g e k e n n z e i c h n e t , daß jede Schicht (10a, 10b) der Filtermasse von einem durchlässigen Zwischenboden (12a, 12b) getragen ist und in oder unter jeden Zwischenboden ein Verteiler (14, 16) für Rückspülmedium angeordnet ist.

- 4 -